# EUROPEAN PATENT APPLICATION

(11) **EP 4 595 735 A1**
(43) Date of publication of application: **06.08.2025**
(21) Application number: 24221264.5
(22) Date of filing: 18.12.2024
(51) Int. Cl.: A01C 5/06

(54) **DUAL OPENER**

(30) Priority: 30.01.2024 US 202418426446
(71) Applicant: Deere & Company, Moline, IL 61265 (US)
(72) Inventor: Soto Lozano, Carlos Alberto, Mannheim (DE); Ruby, Jordan J., Mannheim (DE); Martin, Robert, Mannheim (DE)
(74) Representative: Reichert, Christian

(57) **Abstract**

A dual opener (130) movable in a working direction for opening a trench in soil is disclosed. The dual opener (130) comprising: a frame support (132) having a first end (134) and a second end (136), the first end (134) coupled to a frame of a planting implement; and a first opener assembly (200) and a second opener assembly (300), each of the first and second opener assemblies (200, 300) comprising: a support arm (202, 302) having a first end (204, 304) selectably, pivotably engaged with the frame support (132) and a second end (206, 306) engaged with an axle (220, 320); a blade (222, 322) selectably coupled to the axle (220, 320) and configured to rotate about the axle (220, 320); a wheel bracket (226, 326) comprising a plurality of apertures and selectably coupled to the axle (220, 320) at a first aperture (227, 327) of the plurality of apertures; a wheel (224, 324) selectably coupled to the wheel bracket (226, 326) at a second aperture (228, 328) of the plurality of apertures and configured to rotate about an axis of the second aperture (228, 328); and a spring (232, 332) selectably, pivotably coupled to the frame support (132) and configured to provide a downforce to the respective opener assemblies (200, 300), resulting in additional downforce application to the opener assemblies (200, 300) in conjunction with a downforce applied by the planting implement.

## Description

### BACKGROUND

An agricultural opener is a component of a heavy-duty planting machine used in farming to open a trench in soil for placing seeds or fertilizer at a desired depth. To open a trench for fertilizer, fertilizer openers utilize downforce generated by the mass of the heavy-duty machinery to which it is mounted to drive a cutting mechanism into and along the soil. Fertilizer openers can be single or dual mounted assemblies to enable fertilizer to be placed on one or both sides of planted seeds. Placing fertilizer at a desired depth and distance from seeds, particularly on both sides of the seeds, results in greater root development that increases nutrient taking and yield.

### SUMMARY

This Summary is provided to introduce a selection of concepts in a simplified form that are further described below in the Detailed Description. This Summary is not intended to identify key factors or essential features of the claimed subject matter, nor is it intended to be used to limit the scope of the claimed subject matter.

One or more techniques and systems are described herein for mounting a dual fertilizer opener to a planting implement to efficiently open farming soil for the application of fertilizer on both sides of planted seeds while maintaining the downforce necessary to open dual trenches of a desired depth.

In one implementation, a dual fertilizer opener movable in a working direction for opening a trench in soil comprises a frame support having a first end and a second end, the first end coupled to a frame of a planting implement and positioned such that the dual fertilizer opener is implemented before a seed opener. The dual fertilizer opener further comprises a first opener assembly and a second opener assembly each being configured to pivot independently from the other. Each of the first and second opener assemblies includes a support arm having a first end selectably pivotably engaged with the second end of the frame support and a second end pivotably engaged with an axle, a blade selectably coupled to the axle and configured to rotate about the axle, a wheel bracket having a plurality of apertures and selectably coupled to the axle at a first aperture of the plurality of apertures, a wheel selectably coupled to the wheel bracket at a second aperture of the plurality of apertures and configured to rotate about an axis of the second aperture, a scraper selectably coupled to the second end of the support arm, and a spring selectably pivotably coupled to the frame support and configured to provide a downforce to the respective opener assemblies, resulting in additional downforce application to the opener assemblies in conjunction with a downforce applied by the planting implement.

The depth at which each blade may cut a trench in the soil may be adjusted by converting the wheel of each opener assembly between at least a first wheel position in relation to its respective blade and a second wheel position in relation to its respective blade, thereby adjusting a distance by which the bottom edge of each blade extends beyond the bottom edge of its respective wheel.

The lateral distance from a seed placement at which each blade may cut a trench may be adjusted by converting the first opener assembly and second opener assembly between at least a first lateral position and a second lateral position by means of spacers, the second lateral position being greater than the first lateral position.

To the accomplishment of the foregoing and related ends, the following description and annexed drawings set forth certain illustrative aspects and implementations. These are indicative of but a few of the various ways in which one or more aspects may be employed. Other aspects, advantages and novel features of the disclosure will become apparent from the following detailed description when considered in conjunction with the annexed drawings.

### BRIEF DESCRIPTION OF THE DRAWINGS

The examples disclosed herein may take physical form in certain parts and arrangement of parts, and will be described in detail in this specification and illustrated in the accompanying drawings which form a part hereof and wherein:
FIGURE 1 is a component diagram illustrating a perspective view of a dual fertilizer opener according to an implementation.
FIGURE 2 is a component diagram illustrating a perspective view of a dual fertilizer opener in an active position according to an implementation.
FIGURE 3 is a component diagram illustrating a perspective view of a dual fertilizer opener in an inactive position according to an implementation.
FIGURE 4 is a component diagram illustrating a right view of a dual fertilizer opener in an individual pivoted position according to an implementation.
FIGURE 5 is a component diagram illustrating a left view of a dual fertilizer opener in an individual pivoted position according to an implementation.
FIGURE 6 is a component diagram illustrating a rear view of a dual fertilizer opener in a first lateral position configuration according to an implementation.
FIGURE 7 is a component diagram illustrating a rear view of a dual fertilizer opener in a second lateral position configuration according to an implementation.
FIGURE 8 is a component diagram illustrating a top view of a dual fertilizer opener in a first lateral position configuration according to an implementation.
FIGURE 9 is a component diagram illustrating a top view of a dual fertilizer opener in a second lateral position configuration according to an implementation.

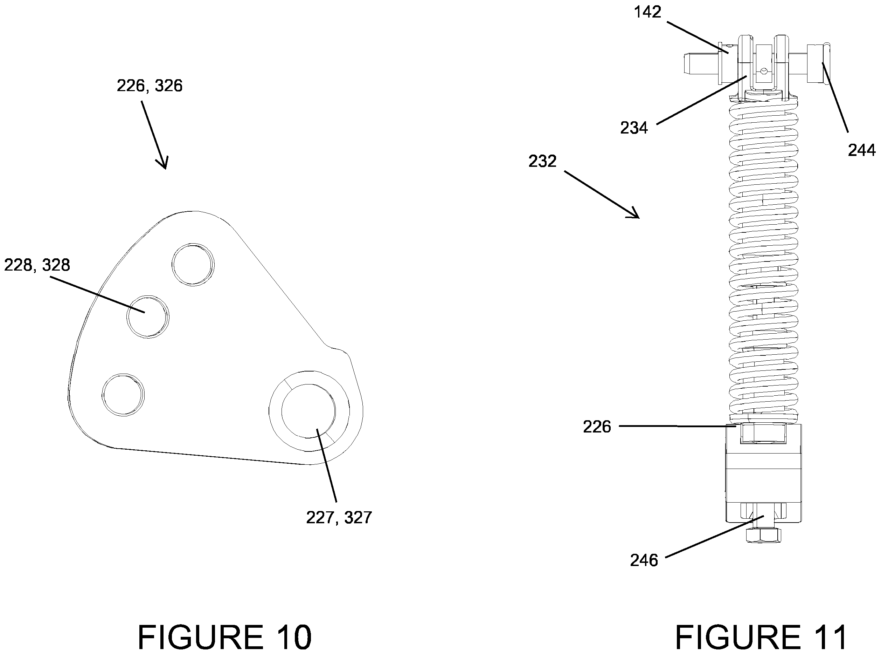

FIGURE 10 is a component diagram illustrating a side view of a wheel bracket of a dual fertilizer opener.
FIGURE 11 is a component diagram illustrating a bottom view of a spring of a dual fertilizer opener.

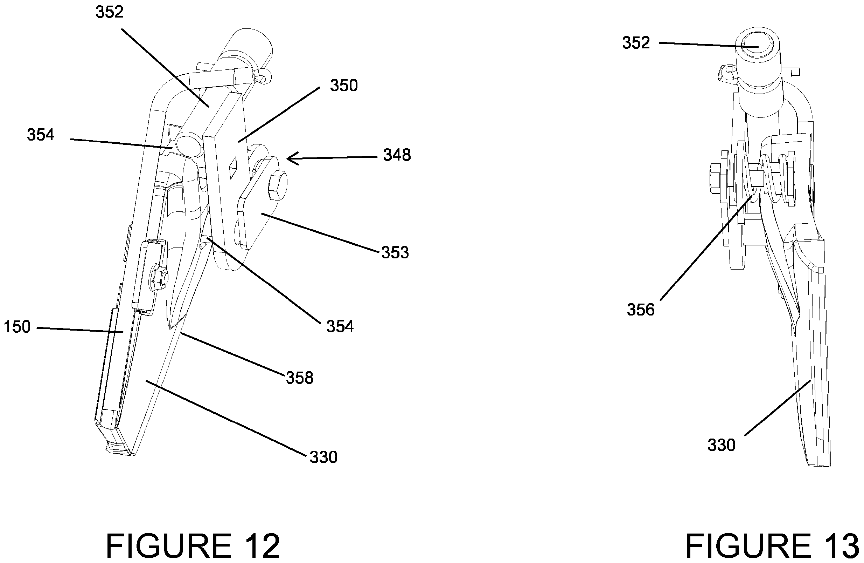

FIGURE 12 is a component diagram illustrating a perspective view of a scraper assembly of a dual fertilizer opener.
FIGURE 13 is a component diagram illustrating a front view of a scraper assembly of a dual fertilizer opener.

### DETAILED DESCRIPTION

The claimed subject matter is now described with reference to the drawings, wherein like reference numerals are generally used to refer to like elements throughout. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

The methods and systems disclosed herein, for example, may be suitable for use in different fertilizer openers as a part of large-scale seed planting systems and other agricultural and agrarian applications requiring a particular trench opened in the soil. That is, the herein disclosed examples can be implemented in different agricultural equipment other than for opening trenches particularly for placing fertilizers such as liquid fertilizers.

An example planting system or implement (not shown) for planting a high volume of seeds and accurately dispensing necessary fertilizer over large swaths of land or fields may include a frame having a first end configured to be coupled to a tractor or other mechanism having towing capabilities to allow the planting implement to be towed through a crop field or otherwise transported. The planting implement may further include one or more wheels for traversing along the soil or ground.

The planting implement may include a plurality of seeding units coupled to the frame for planting a high volume of seeds. Each seeding unit may include its own seeding frame to which a seed hopper is fixed. The seed hopper is configured to be operably attached to a seed dispenser such that the seed hopper may store seed to be planted by the planting implement and may provide the seed to the seed dispenser for planting. To dispense the seed at a desired depth in the soil, each seeding unit may include a seed opener configured to utilize downforce from the seeding unit to open a trench in the soil. After seed is dispensed in the opened trench, a seed closer operably fixed to the seeding unit is passed over the trench to cover the planted seed.

To improve root development to increase nutrient taking and yield of the planted seed, fertilizer may be dispensed in the soil at a desired distance on one or more sides of the seed. To store and dispense the fertilizer at the desired depth in the soil and distance from the planted seed, the planting implement may include one or more fertilizer units. The fertilizer units may include a fertilizer tank for storing fertilizer, e.g., liquid or gas fertilizer, or a hopper for storing dry granular fertilizer. Each fertilizer unit may further include a fertilizer dispenser for operably dispensing fertilizer and a dual fertilizer opener for operably opening a trench of a desired depth in the soil on one or more sides of planted seeds.

A conventional dual fertilizer opener may be designed to be mounted to a seeding unit of a planting implement, such as to a seeding frame. When a dual fertilizer opener is mounted to the seeding unit, the downforce generated by the seeding unit is shared by the seed opener and the dual fertilizer opener. This may result in a decrease in downforce through the dual fertilizer opener and therefore a downgrade in performance of both openers.

In addition to lessening the downforce distributed through the dual fertilizer opener, mounting the dual fertilizer opener on the seeding unit limits the space available for the components of the dual fertilizer opener. As will be described in detail below, a dual fertilizer opener may include two opener assemblies each having a blade such as a disk for cutting or otherwise opening a trench in the soil, a scraper for scraping soil from each blade to maintain blade efficiency, and a fertilizer dispenser nozzle from which fertilizer may be dispensed into each opened trench. By mounting the dual fertilizer opener to the seeding unit, space between the various components is limited. As the space between components decreases, so too does the space for residue flow (e.g., soil or dirt), thereby increasing the risk of plugging a fertilizer dispenser nozzle with the flowing residue. To decrease the risk of plugging or otherwise accommodate for limited space, conventional dual fertilizer openers may reduce the size of the blades. But reducing the size of the blades limits the depth at which an opener may operate. In some instances, such depth limits may prevent fertilizer from being applied at a desired depth for a particular crop seed.

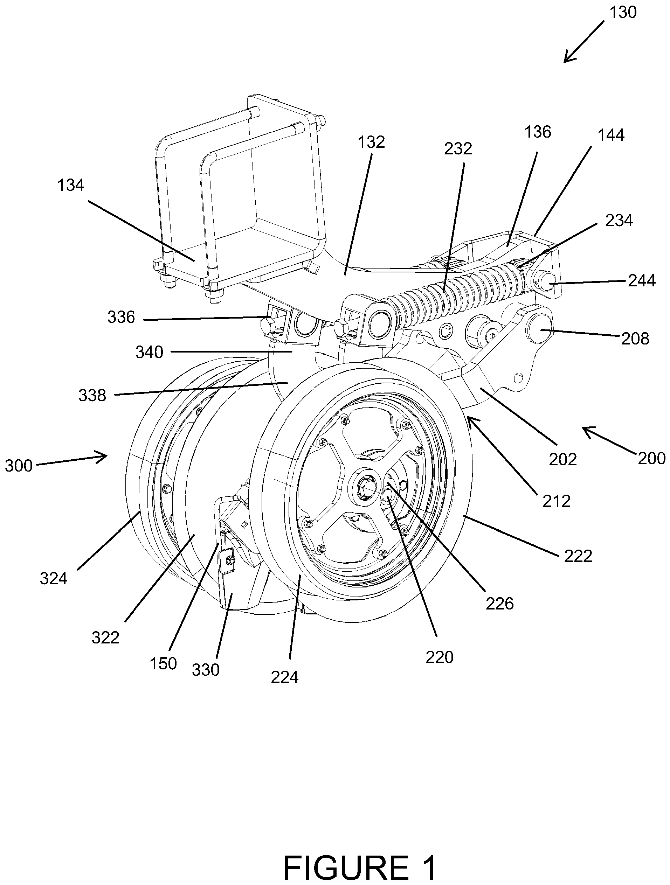

In the present application, an implementation of which is shown in FIGURE 1, it is desirable to provide fertilizer to either side of planted seed without decreasing the performance of a dual fertilizer opener and without increasing the risk of plugging. To do so, a dual fertilizer opener 130 is provided having a frame support 132 having a first end 134 configured to be mounted to the frame of the planting implement, and a second end 136 configured to be selectably pivotably coupled to a first opener assembly 200 and a second opener assembly 300. By mounting the first end 134 of the frame support 132 to the frame of the planting implement, the downforce provided by the planting implement is distributed substantially through the frame support 132 to the first and second opener assemblies 200, 300. Additionally, by separating the components of the dual fertilizer opener 130 from the components of seed openers, the distance between trenches opened by the dual fertilizer opener 130 may be reduced without increasing the risk of plugging a fertilizer dispenser nozzle 150.

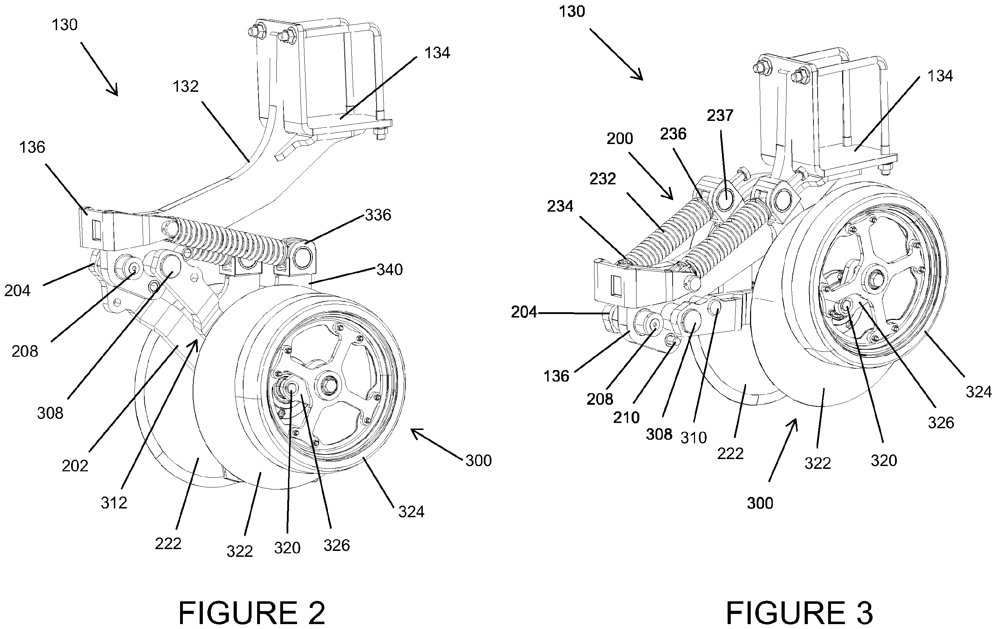

Turning now to FIGURES 2-7, the first and second opener assemblies 200, 300 will be described in detail. Each opener assembly 200, 300 includes a support arm 202, 302 having a first end 204, 304 selectably pivotably coupled to the second end 136 of the frame support 132, and a second end 206, 306 configured to receive an axle 220, 320. A blade 222, 322 for opening a trench in the soil is selectably coupled to each axle 220, 320, and a wheel 224, 324 for supporting each opener assembly 200, 300 is selectably coupled to each axle 220, 320 by means of a wheel bracket 226, 326. Each opener assembly 200, 300 further includes a scraper 230, 330 for scraping soil and other debris from its respective blade 222, 322, and a spring 232, 332 configured to provide additional downforce to each opener assembly 200, 300.

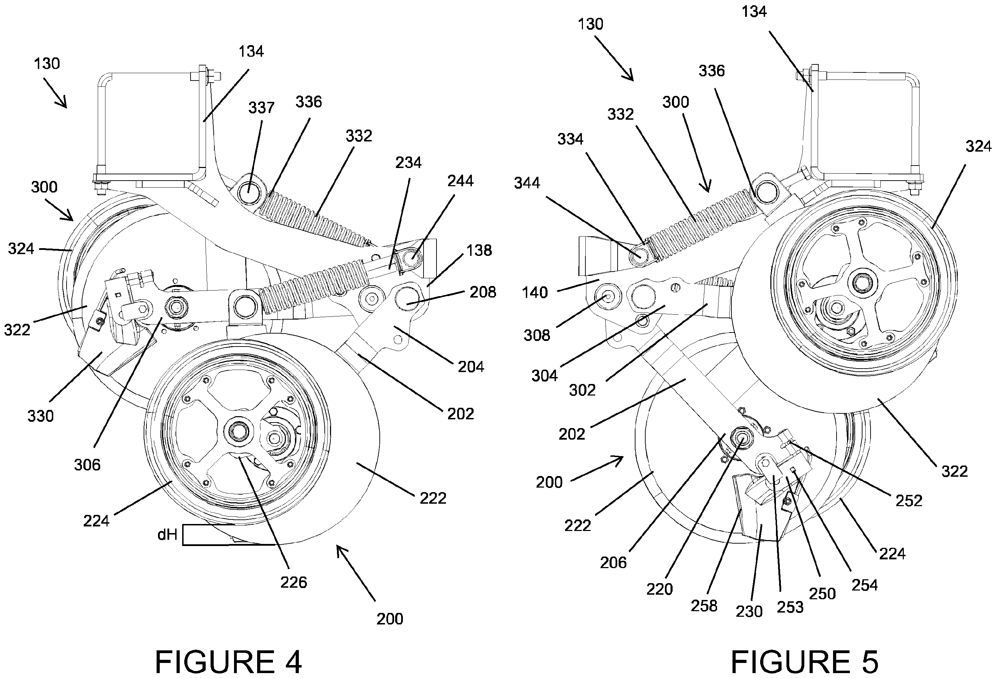

In an implementation, the first end 204, 304 of each support arm 202, 302 is selectably, pivotably coupled to the second end 136 of the frame support 132 by an arm pivot pin 208, 308 received through corresponding throughholes in the frame support 132 and each support arm 202, 302 such that each support arm 202, 302 may pivot about its respective arm pivot pin 208, 308. As shown in FIGURES 4-5, each opener assembly 200, 300 may be configured to be selectably pivotably coupled to opposite sides of the second end 136 of the frame support 132. For example, the first end 204 of the support arm 202 of the first opener assembly 200 may be selectably pivotably coupled to the second end 136 of the frame support 132 such that the first opener assembly 200 is positioned proximate a first side 138 of the frame support 132 upon assembly. In the same implementation, the first end 304 of the support arm 302 of the second opener assembly 300 may be selectably pivotably coupled to the second end 136 of the frame support 132 such that the second opener assembly 300 is positioned proximate a second side 140 of the frame support 132 upon assembly.

In the same implementation, the arm pivot pin 208 of the first opener assembly 200 is offset from the arm pivot pin 308 of the second opener assembly 300 along an axis defined by the direction of travel. By offsetting the arm pivot pins 208, 308 on the frame support 132, each opener assembly 200, 300 may independently rotate about its respective arm pivot pin 208, 308. Additionally, offsetting the arm pivot pins 208, 308 results in the second end 206 of the support arm 202 of the first opener assembly 200 being offset from its counterpart in the direction of travel, thereby decreasing the risk of plugging a fertilizer dispenser nozzle 150 despite the distance between each blade 222, 322 being decreased for a given seed placement.

In the same implementation, the second end 206, 306 of each support arm 202, 302 is offset from its respective first end 204, 304 by means of a jog bend towards its opposite opener assembly 200, 300. By offsetting the second end 206, 306 of each support arm 202, 302 towards its opposite opener assembly 200, 300, an offset region 212, 312 may be formed for positioning the blade 222, 322 and wheel 224, 324 of each opener assembly 200, 300 therein, thereby decreasing the minimum distance each blade 222, 322 must be placed from a given seed placement.

The first and second opener assemblies 200, 300 may be further configured to be selectably pivotably coupled to the second end 136 of the frame support 132 such that the first and second opener assemblies 200, 300 may independently pivot between a first active position as shown in FIGURE 2, and a second inactive position as shown in FIGURE 3. When in the active position, at least one of the first or second opener assemblies 200, 300 is lowered and configured to utilize downforce to open a trench in the soil for a desired placement of fertilizer on either side of a given seed placement. When an opener assembly 200, 300 is in the inactive position, at least one of the first or second opener assemblies 200, 300 is raised away from the ground and configured to be secured for transport via a securing mechanism. In one implementation, each of the first and second opener assemblies 200, 300 may be manually secured in the inactive positon via a locking pin 210, 310.

To effectuate the opening of respective trenches in the soil, each opener assembly 200, 300 includes an axle 220, 320 selectably coupled to the second end 206, 306 of the support arm 202, 302, and a blade 222, 322 (e.g., a cutting disk) selectably coupled to the axle 220, 320 such that the blade 222, 322 is configured to rotate about the axle 220, 320. Each axle 220, 320 and blade 222, 322 are oriented such that when the planting implement is towed, each blade 222, 322 cuts a trench in the direction of travel. Each axle 220, 320 may be any size and made up of any suitable material capable of withstanding at least the downforce distributed from the planting implement while being towed. For example, each axle 220, 320 may be a rod or shaft made up of iron, steel, metal alloys, titanium, etc. Each blade 222, 322 may be made up of any material capable of maintaining its sharpness and integrity while being towed at least through fields having soil, rocks, grasses, chemicals (e.g., fertilizers), and other debris. For example, each blade 222, 322 may be made up of iron, steel, metal alloys, titanium, etc.

To support the first and second opener assemblies 200, 300 when the opener assemblies 200, 300 are in the active position, and to fix the depth at which each blade 222, 322 may cut into the soil, each opener assembly 200, 300 includes a wheel 224, 324 (e.g., a gauge wheel), and a wheel bracket 226, 326 for coupling the wheel 224, 324 to the axle 220, 320. Each wheel bracket 226, 326 may include a plurality of apertures configured to enable the wheel bracket 226, 326 to be selectably coupled to the axle 220, 320 at a first aperture 227, 327, and to be selectably coupled to the wheel 224, 324 at a second aperture 228, 328. Each wheel 224, 324 is configured to rotate about an axle of the second aperture 228, 328 of the plurality of apertures.

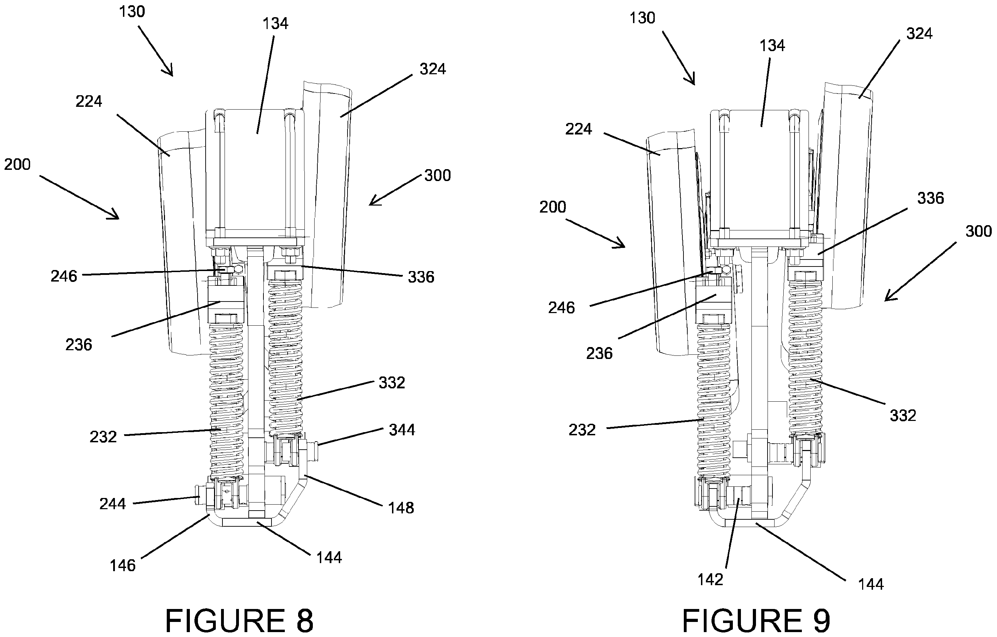

In one implementation, and as shown in FIGURE 8, each wheel bracket 226, 326 may have a substantially triangular geometry wherein a first aperture 227, 327 of the plurality of apertures is positioned proximate a vertex of the wheel bracket 226, 326, and a second aperture 228, 328 of the plurality of apertures may be any one of three apertures positioned proximate an end of the wheel bracket 226, 326 opposite the first aperture 227, 327. It will be appreciated that each wheel bracket 226, 326 may be any geometry capable of comprising a plurality of apertures, and that each plurality of apertures may be arranged in any pattern capable of sufficiently supporting each opener assembly 200, 300.

When operated, the distance by which each blade 222, 322 extends into the soil determines the depth at which each trench is opened. Each blade 222, 322 extends into the soil a distance dH by which the bottom edge of the blade 222, 322 extends beyond the bottom edge of the wheel 224, 324 when each is mounted on its respective axle 220, 320. In one implementation, the distance dH by which the bottom edge of the blade 222, 322 extends beyond the bottom edge of the wheel 224, 324 may be adjusted by changing the axis about which each wheel 224, 324 rotates from the axle 220, 320 by means of the wheel bracket 226, 326.

In one non-limiting example, the first aperture 227, 327 of each wheel bracket 226, 326 may be configured to be a distance from the second aperture 228, 328 such that upon assembly, the axis of each wheel 224, 324 is offset in relation to its respective axle 220, 320 such that the bottom edge of each blade 222, 322 extends 3 inches beyond the bottom edge of its respective wheel 224, 324 (i.e., dH₁ is 3 inches). In the same embodiment, each wheel 224, 324 may be re-configured to rotate about a third aperture of the plurality of apertures of each wheel bracket 226, 326 such that the bottom edge of each blade 222, 322 extends 1.5 inches beyond the bottom edge of its respective wheel 224, 324 (i.e., dH₂ is 1.5 inches). In the same embodiment, each wheel 224, 324 may be further re-configured to rotate about a fourth aperture of the plurality of apertures of each wheel bracket 226, 326 such that the bottom edge of each blade 222, 322 extends 2 inches beyond the bottom edge of its respective wheel 224, 324 (i.e., dH₃ is 2 inches). It will be appreciated that the wheel bracket 226, 326 may be configured to be adjusted to achieve at least two different trench depths from at least 1.5 inches to 3 inches.

Each of the first and second opener assemblies 200, 300 further include a scraper 230, 330 selectably coupled the second end 206, 306 of each support arm 202, 302. As the first and second opener assemblies 200, 300 are operated, each blade 222, 322 may accumulate residue such as mud, grasses, and other debris found in the soil being opened. To prevent a residue build up that may decrease the efficiency of each blade 222, 322, each scraper 230, 330 is configured to scrape the residue from its respective blade 222, 322 as the blade 222, 322 rotates about its respective axle 220, 320. The scraper 230, 330 may be further configured to protect the fertilizer dispenser nozzle 150 from being plugged or otherwise damaged from the same residue and debris. It will be appreciated that the scraper 230, 330 may be made up of any suitable material capable of withstanding soil and debris often found in open fields (e.g., rocks), and capable of scraping the blades 222, 322 without causing accelerated wear to the blades 222, 322, such as white iron or carbidic austempered ductile cast iron.

In one implementation, each scraper 230, 330 may be selectably coupled to the second end 206, 306 of the respective support arm 202, 302 by a scraper bracket 248, 348. For example, each scraper bracket 248, 348 may include a body 250, 350 having a first fastener arm 252, 352 configured to be rotatably fastened to the second end 206, 306 of the respective support arm 202, 302, a second fastener arm 253, 353 fastened to a first end of a scraper spring 256, 356, and at least two scraper arms 254, 354 configured to be selectably, movably coupled to the scraper 230, 330. The scraper spring 256, 356 may be disposed between the second end 206, 306 of the respective support arm 202, 302 and the scraper bracket 248, 348, and configured to apply an adjustable force so as to maintain contact between the scraper 230, 330 and the blade 222, 322. It will be appreciated that the fastener arms 252, 352 may be fastened to the second end 206, 306 of the support arm 202, 302 by any suitable means including, but not limited to, receiver mechanisms, pinning mechanisms, nut and bolt systems, and combinations of the same. It will also be appreciated that the scraper arms 254, 354 may be selectably coupled to the scraper 230, 330 by any suitable means including, but not limited to, ball joints, T-joints, plugs, and combinations of the same. The rotational movement of the body 250, 350 about the first fastener arm 252, 352 and the movable coupling of the scraper arms 254, 354 to the scraper 230,330 allow a scraping edge 258, 358 of the scraper 230, 330 to translate and rotate such that the scraping edge 258, 358 stays in contact with the blade 222, 322 as the blade 222, 322 flexes and/or changes through varying soil conditions.

Each of the first and second opener assemblies 200, 300 further include a spring 232, 332 to provide additional downforce to each blade 222, 322 and wheel 224, 324, thereby improving the terrain copying and ground contact of each opener assembly 200, 300. Each spring 232, 332 includes a first end 234, 334 configured to be pivotably coupled to the second end 136 of the frame support 132, and a second end 236, 336 configured to be coupled to a first end 240, 340 of a spring arm 238, 338. The spring arm 238, 338 further includes a second end 242, 342 fixed to the support arm 202, 302 proximate the second end 206, 306 of the support arm 202, 302.

In one implementation, the frame support 132 may include a spring bar 144 fixed to the second end 136 of the frame support 132 and configured to secure the position of the first end 234, 334 of each spring 232, 332 in relation to the second end 136 of the frame support 132. The spring bar 144 may be generally u-shaped having prongs, and may be configured such that the prongs extend in a direction away from the direction of travel and such that a first prong 146 is positioned proximate the first side 138 of the frame support 132 and a second prong 148 is positioned proximate the second side 140 of the frame support 132. In the same implementation, the first end 234, 334 of each spring 232, 332 may be generally u-shaped having prongs. The first end 234, 334 of each spring 232, 332 may be selectably, pivotably coupled to the second end 136 of the frame support 132 by a spring pivot pin 244, 344 received through corresponding throughholes in a respective prong of the spring bar 144, the second end of the frame support 132, and each of the prongs of the first end 234, 334 of the spring 232, 332 such that each spring 232, 332 may rotate about its respective spring pivot pin 244, 344.

In the same implementation, the spring pivot pin 244 of the first opener assembly 200 may be offset from the spring pivot pin 344 of the second opener assembly 300 in the direction of travel. By offsetting the spring pivot pins 244, 344 in relation to the frame support 132, each spring 232, 332 may independently rotate about its respective spring pivot pin 244, 344 in accordance with its respective opener assembly 200, 300

As shown in FIGURES 4-5, each opener assembly 200, 300 may be configured to be selectably pivotably coupled to opposite sides of the second end 136 of the frame support 132. For example, the first end 234 of the spring 232 of the first opener assembly 200 may be selectably pivotably coupled to the second end 136 of the frame support 132 such that the spring 232 of the first opener assembly 200 is positioned proximate the first side 138 of the frame support 132 upon assembly. In the same implementation, the first end 334 of the spring 332 of the second opener assembly 300 may be pivotably coupled to the second end 136 of the frame support 132 such that the spring 332 of the second opener assembly 300 is positioned proximate the second side 140 of the frame support 132 upon assembly.

In one implementation, each spring 232, 332 may include a spring rod 246, 346 configured to extend through a pivot joint 237, 337 formed in the second end 236, 336 of each spring 232, 332, the pivot joint 237, 337 being fixedly coupled to the first end 240, 340 of the respective spring arm 238, 338, upon the compression of the spring 232, 332. For example, as one or both of the opener assemblies 200, 300 pivot about its arm pivot pin 208, 308 and spring pivot pin 244, 344, its spring 232, 332 may be compressed. By configuring the spring rod 246, 346 to extend through said pivot joint 237, 337, the alignment of the spring 232, 332 may be maintained during the rotation of its respective opener assembly 200, 300 as the spring 232, 332 is compressed.

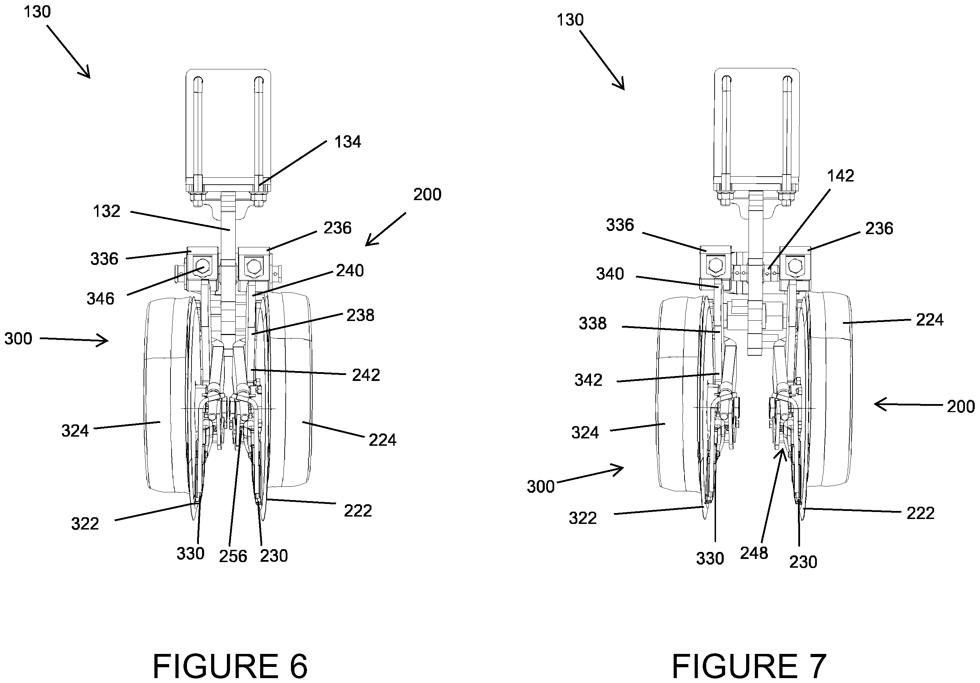

Turning now to FIGURES 6-9, the lateral positioning of the first and second opener assemblies 200, 300 will now be described. To allow a user to dispense fertilizer at a desired distance from a given seed to be planted, each of the first and second opener assemblies 200, 300 may be operably convertible between a first lateral position as shown in FIGURE 6, and a second lateral position as shown in FIGURE 7, the second lateral position being greater than the second lateral position. In one implementation, the dual fertilizer opener 130 may be manually convertible from the first lateral position to the second lateral position by providing spacers 142 to each arm pivot pin 208, 308 and each spring pivot pin 244, 344. For example, each spacer 142 may be substantially tube shaped and configured to either receive each arm pivot pin 208, 308 such that each spacer 142 is positioned between each support arm 202, 302 and the frame support 132, and/or to receive each spring pivot pin 244, 344 such that each spacer 142 is positioned between each spring 232, 332 and the frame support 132. By increasing the distance from each support arm 202, 302 and spring 232, 332 to the frame support 132, the lateral position of the blades 222, 322 can be increased. In one implementation, and as shown in FIGURE 9, the first end 234, 334 of each spring 232, 332 may be configured to be selectably pivotably coupled to the spring bar 144 of the frame support 132 via a spring pivot pin 244, 344 such that a prong 146, 148 of the spring bar 144 is received between the prongs of the first end 234, 334 of each spring 232, 332.

In one implementation, the first lateral position may be a 2 inch by 2 inch orientation for a first crop seed that is configured to be manually convertible to a second lateral position having a 3 inch by 3 inch orientation for a second crop seed by providing at least one spacer 142 on each arm pivot pin 208, 308 and each spring pivot pin 244, 344. For example, when configured in the 2 inch by 2 inch orientation, the blades 222, 322 of each opener assembly 200, 300 are positioned to open a trench two inches from either side of a given seen to be planted. When configured in the 3 inch by 3 inch orientation, the blades 222, 322 of each opener assembly 200, 300 are positioned to open a trench 3 inches from either side of a given seen to be planted. It will be appreciated that different sizes and numbers of spacers 142 may be used to accomplish any first and second lateral position orientations desired. For example, the lateral positions may be configured to open trenches in soil two or more inches from a given seed placement.

Operation of the dual fertilizer opener 130 will now be described. Prior to use, a user may adjust the first and second opener assemblies 200, 300 between first and second lateral positions by means of spacers 142 based on the desired fertilizer placement for a given seed to be planted. The user may further adjust the depth at which each blade 222, 322 opens a trench in the soil by reconfiguring each wheel 224, 324 on its respective wheel bracket 226, 326 based on the desired fertilizer placement for a given seed to be planted. When transporting the dual fertilizer opener 130 to a field for use, each of the first and second opener assemblies 200, 300 are in the inactive position.

During operation of the dual fertilizer opener 130, at least one of the first and second opener assemblies 200, 300 are in the active position. As the dual fertilizer opener 130 is towed in the direction of travel through farmland or a field, the downforce generated by the planting implement and by each spring 232, 332 drives each blade 222, 322 into the soil, opening a trench in the soil in the direction of travel. As each opener assembly 200, 300 is pulled through the soil, each wheel 224, 324 allows its respective opener assembly 200, 300 to pivot about its arm pivot pin 208, 308 in reaction to any changes in terrain (e.g., elevation changes, divots, rocks, etc.).

In rotating about its respective arm pivot pin 208, 308, a force is conveyed from the rotating support arm 202, 302 through its respective spring arm 238, 338 and into its respective spring 232, 332. As the spring is compressed, a counter-force is produced toward the spring arm 238, 338 and down into the support arm 202, 302. During operation, this additional downforce maintains contact between each opener assembly 200, 300 and the ground, including during a terrain change or other turbulence caused by debris in soil. Further, because each opener assembly 200, 300 is able rotate independently from its counterpart opener assembly 200, 300, each opener assembly 200, 300 is able to maintain ground contact if one opener assembly 200, 300 experiences a terrain change.

As each blade 222, 322 opens a trench in the soil, a fertilizer dispenser nozzle 150 mounted to the second end 206, 306 of each support arm 202, 302 dispenses fertilizer into the opened trench in the soil. Additionally, to prevent the plugging of the fertilizer dispenser nozzle 150 and to maintain the efficiency of each blade 222, 322, a scraper 230, 330 continuously scrapes soil and other debris from each blade 222, 322 as the blade 222, 322 rotates against its respective scraper 230, 330.

While various spatial and directional terms, including but not limited to top, bottom, lower, mid, lateral, horizontal, vertical, front and the like are used to describe the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

The word "exemplary" is used herein to mean serving as an example, instance or illustration. Any aspect or design described herein as "exemplary" is not necessarily to be construed as advantageous over other aspects or designs. Rather, use of the word exemplary is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Further, at least one of A and B and/or the like generally means A or B or both A and B. In addition, the articles "a" and "an" as used in this application and the appended claims may generally be construed to mean "one or more" unless specified otherwise or clear from context to be directed to a singular form.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims. Of course, those skilled in the art will recognize many modifications may be made to this configuration without departing from the scope or spirit of the claimed subject matter.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

Various operations of implementations are provided herein. In one implementation, one or more of the operations described may constitute computer readable instructions stored on one or more computer readable media, which if executed by a computing device, will cause the computing device to perform the operations described. The order in which some or all of the operations are described should not be construed as to imply that these operations are necessarily order dependent. Alternative ordering will be appreciated by one skilled in the art having the benefit of this description. Further, it will be understood that not all operations are necessarily present in each implementation provided herein.

Any range or value given herein can be extended or altered without losing the effect sought, as will be apparent to the skilled person.

Also, although the disclosure has been shown and described with respect to one or more implementations, equivalent alterations and modifications will occur to others skilled in the art based upon a reading and understanding of this specification and the annexed drawings. The disclosure includes all such modifications and alterations and is limited only by the scope of the following claims. In particular regard to the various functions performed by the above described components (e.g., elements, resources, etc.), the terms used to describe such components are intended to correspond, unless otherwise indicated, to any component which performs the specified function of the described component (e.g., that is functionally equivalent), even though not structurally equivalent to the disclosed structure which performs the function in the herein illustrated exemplary implementations of the disclosure.

As used in this application, the terms "component," "module," "system," "interface," and the like are generally intended to refer to a computer-related entity, either hardware, a combination of hardware and software, software, or software in execution. For example, a component may be, but is not limited to being, a process running on a processor, a processor, an object, an executable, a thread of execution, a program and/or a computer. By way of illustration, both an application running on a controller and the controller can be a component. One or more components may reside within a process and/or thread of execution and a component may be localized on one computer and/or distributed between two or more computers.

Furthermore, the claimed subject matter may be implemented as a method, apparatus or article of manufacture using standard programming and/or engineering techniques to produce software, firmware, hardware or any combination thereof to control a computer to implement the disclosed subject matter. The term "article of manufacture" as used herein is intended to encompass a computer program accessible from any computer-readable device, carrier or media. Of course, those skilled in the art will recognize many modifications may be made to this configuration without departing from the scope or spirit of the claimed subject matter.

In addition, while a particular feature of the disclosure may have been disclosed with respect to only one of several implementations, such feature may be combined with one or more other features of the other implementations as may be desired and advantageous for any given or particular application. Furthermore, to the extent that the terms "includes," "having," "has," "with," or variants thereof are used in either the detailed description or the claims, such terms are intended to be inclusive in a manner similar to the term "comprising."

The implementations have been described, hereinabove. It will be apparent to those skilled in the art that the above methods and apparatuses may incorporate changes and modifications without departing from the general scope of this invention. It is intended to include all such modifications and alterations in so far as they come within the scope of the appended claims or the equivalents thereof.

## Claims

1. A dual fertilizer opener (130) movable in a working direction for opening a trench in soil, comprising:
a frame support (132) having a first end (134) and a second end (136), the first end (134) coupled to a frame of a planting implement; and
a first opener assembly (200) and a second opener assembly (300), each of the first and second opener assemblies (200, 300) comprising:
a support arm (202, 302) having a first end (204, 304) selectably, pivotably engaged with the frame support (132) and a second end (206, 306) engaged with an axle (220, 320);
a blade (222, 322) selectably coupled to the axle (220, 320) and configured to rotate about the axle (220, 320);
a wheel bracket (226, 326) comprising a plurality of apertures and selectably coupled to the axle (220, 320) at a first aperture (227, 327) of the plurality of apertures;
a wheel (224, 324) selectably coupled to the wheel bracket (226, 326) at a second aperture (228, 328) of the plurality of apertures and configured to rotate about an axis of the second aperture (228, 328); and
a spring (232, 332) selectably, pivotably coupled to the frame support (132) and configured to provide a downforce to the respective opener assemblies (200, 300), resulting in additional downforce application to the opener assemblies (200, 300) in conjunction with a downforce applied by the planting implement.

2. The fertilizer opener (130) according to claim 1, wherein the first opener assembly (200) and second opener assembly (300) are configured to pivot between a first position and a second position, wherein the first position comprises a lower position than the first position, and wherein the first opener assembly (200) is configured to pivot independently from the second opener assembly (300).

3. The fertilizer opener (130) according to claim 1 or 2, wherein the first opener assembly (200) and second opener assembly (300) are configured to be convertible between at least a first lateral position from the frame support (132) and a second lateral position from the frame support (132) along an axis orthogonal to the working direction, the second lateral position being further from the frame support (132) than the first lateral position.

4. The fertilizer opener (130) according to claim 3, further comprising one or more spacers (230, 330) configured to effectuate the conversion of the first opener assembly (200) and second opener assembly (300) from the first lateral position to the second lateral position.

5. The fertilizer opener (130) according to one of the claims 1 to 4, wherein the wheels (224, 324) of respective opener assemblies (200, 300) are configured to be convertible between a first wheel position in relation to its corresponding blade (222, 322) and a second wheel position in relation to its corresponding blade (222, 322), wherein in the first wheel position a distance between a bottom edge of the blade (222, 322) and a bottom edge of the wheel (224, 324) comprises a first distance, and in the second wheel position a distance between the bottom edge of the blade (222, 322) and the bottom edge of the wheel (224, 324) comprises a second distance, the first distance being greater than the second distance.

6. The fertilizer opener (130) according to claim 5, wherein the plurality of apertures of the wheel bracket (226, 326) are configured to effectuate the conversion of each wheel (224, 324) between the first wheel position and the second wheel position.

7. The fertilizer opener (130) according to one of the claims 1 to 6, wherein respective opener assemblies (200, 300) further comprise a scraper (230, 330) removably coupled to the second end (206, 306) of the support arm (202, 302) and be so disposed as to scrape residue from its corresponding blade (222, 322) as the blade (222, 322) rotates through soil.

8. The fertilizer opener (130) according to one of the claims 1 to7, wherein
the second end (136) having a first side (138) and a second side (140); and the first opener assembly (200) selectably pivotably coupled to the first side (138) of the second end (136) of the frame support (132) and the second opener (300) selectably pivotably coupled to the second side (140) of the second end (136) of the frame support (132), each of the first and second opener assemblies (200, 300) being configured to pivot independently from the other, and wherein
the first opener assembly (200) is coupled to the second end (136) of the frame support (132) such that the first opener assembly (200) is offset from the second opener assembly (300) along the frame support (132) in the working direction.

9. The fertilizer opener (130) according to one of the claims 1 to 8, wherein the support arm (202) of the first opener assembly (200) comprises a jog bend such that the second end (206) of the support arm (202) is offset from the first end (204) of the support arm (202) along an axis perpendicular to the working direction toward the second opener assembly (300), and wherein the support arm (302) of the second opener assembly (300) comprises a jog bend such that the second end (306) of the support arm (302) is offset from the first end (304) of the support arm (302) along an axis perpendicular to the working direction toward the first opener assembly (200).

10. The fertilizer opener (130) according to claim 9, wherein the jog bend of each support arm (202, 302) defines an offset region (212, 312) proximate the second end (206, 306) of the support arm (202, 302), and wherein the blade (222, 322) and wheel (224, 324) of each opener assembly (200, 300) are configured to be positioned substantially within the respective offset region (212, 312).
